Europäisches Patentamt

European Patent Office

Office européen des brevets

(11) Veröffentlichungsnummer: **0 361 096**
**A1**

## (12) EUROPÄISCHE PATENTANMELDUNG

(21) Anmeldenummer: 89115763.8

(22) Anmeldetag: 26.08.89

(51) Int. Cl.5: **C08J 9/12 , C08L 25/04**

(30) Priorität: 01.09.88 DE 3829632

(43) Veröffentlichungstag der Anmeldung:
**04.04.90 Patentblatt 90/14**

(84) Benannte Vertragsstaaten:
**BE DE FR GB IT NL SE**

(71) Anmelder: **BASF Aktiengesellschaft**
**Carl-Bosch-Strasse 38**
**D-6700 Ludwigshafen(DE)**

(72) Erfinder: **Alicke, Gerhard**
**Brunnerstrasse 11**
**D-6520 Worms 1(DE)**
Erfinder: **Weber, Reinhold**
**An der Steinernen Bruecke 11**
**D-6704 Mutterstadt(DE)**
Erfinder: **Weilbacher, Manfred, Dr.**
**Taunusstrasse 27**
**D-6710 Frankenthal(DE)**

(54) **Verfahren zur Herstellung von Schaumstoffplatten mit hoher Druckfestigkeit.**

(57) Schaumstoffplatten mit hoher Druckfestigkeit und einem Querschnitt von mindestens 50 cm² werden hergestellt durch Extrusion eines Gemisches aus einem Styrolpolymerisat und 7 bis 16 Gew.% eines Treibmittelgemischs, welches 20 bis 90 Gew.% eines gesättigten $C_3$-$C_5$-Kohlenwasserstoffs, 10 bis 60 Gew.% Ethylchlorid und/oder Kohlendioxid sowie gegebenenfalls bis zu 30 Gew.% Dichlordifluormethan und/oder 1,1-Difluor-1-chlorethan enthält.

EP 0 361 096 A1

## Verfahren zur Herstellung von Schaumstoffplatten mit hoher Druckfestigkeit

Gegenstand der Erfindung ist ein Verfahren zur Herstellung von Schaumstoffplatten mit hoher Druckfestigkeit durch Extrusion eines Gemisches aus einem Styrolpolymerisat, einem Treibmittel und gegebenenfalls üblichen Zusatzstoffen.

Für die Herstellung von Schaumstoffen auf Basis von Styrolpolymerisaten ist eine Vielzahl von Treibmitteln vorgeschlagen worden. Bevorzugt wird Methylchlorid verwendet. Wegen seiner Toxidität sind jedoch extreme Vorsichtsmaßnahmen sowohl bei der Herstellung als auch bei Nachlagerung des Schaumstoffs erforderlich. Der Schaumstoff zeigt zudem bei erhöhten Temperaturen ein beträchtliches Schwindungsverhalten. Bei Verwendung von Chlorfluorkohlenwasserstoffen, wie Dichlordifluormethan, als Treibmittel erhält man Schaumstoffe, die sich bei erhöhten Temperaturen ausdehnen. Gemische aus etwa gleichen Teilen Methylchlorid und Dichlordifluormethan führen zwar zu dimensionsstabilen Schaumstoffen, wegen der Toxidität des Methylchlorids verbietet sich jedoch ihr Einsatz. Ersetzt man Methylchlorid durch das wesentlich weniger toxische Ethylchlorid, so entsteht ein relativ weicher Schaum, der eine ungenügende Druckfestigkeit aufweist. Auch Kohlendioxid ist bereits als Treibmittel empfohlen worden. Sein Einsatz führt jedoch zu offenzelligen Schaumstoffen, die ein hohes Wasseraufnahmevermögen besitzen.

Die Aufgabe der Erfindung besteht darin, ein Verfahren zur Herstellung von Schaumstoffen aus Styrolpolymerisaten aufzuzeigen, bei dem keine toxischen Treibmittel verwendet werden und das zu Schaumstoffen mit geschlossenen Zellen führt, die nur ein geringes Wasseraufnahmevermögen besitzen, die dimensionsstabil sind und eine hohe Druckfestigkeit und Wärmeformbeständigkeit aufweisen. Weiterhin ist es Aufgabe der Erfindung, den Gehalt an Dichlordifluormethan im Schaumstoff zu reduzieren, da dieser Stoff angeblich in der Atmosphäre die Wirksamkeit der Ozonschicht als Solarschirm vermindert.

Die Aufgabe der Erfindung wird gelöst durch die Verwendung eines Treibmittelgemisches enthaltend 20 bis 90 Gew.% mindestens eines gesättigten $C_3$- bis $C_5$-Kohlenwasserstoffs, 10 bis 60 Gew.% Ethylchlorid und/oder Kohlendioxid und gegebenenfalls bis zu 30 Gew.% Dichlordifluormethan und/oder 1,1-Difluor-1-chlorethan.

Gegenstand der Erfindung ist somit ein Verfahren zur Herstellung von Schaumstoffplatten mit hoher Druckfestigkeit und einem Querschnitt von mindestens 50 cm² durch Extrusion eines Gemisches aus einem Styrolpolymerisat 7 bis 16 Gew.%, bezogen auf das Styrolpolymerisat, eines Treibmittels sowie gegebenenfalls üblichen Zusatzstoffen, dadurch gekennzeichnet, daß man als Treibmittel ein Gemisch verwendet, welches

    a) 20 bis 90 Gew.% mindestens eines gesättigten $C_3$- bis $C_5$-Kohlenwasserstoffs
    b) 10 bis 60 Gew.-% Ethylchlorid und/oder Kohlendioxid und
    c) 0 bis 30 Gew.-% Dichlordifluormethan und/oder 1,1-Difluor-1-chlorethan enthält.

Styrolpolymerisate im Sinne dieser Erfindung sind Polystyrol und Mischpolymerisate des Styrols, die mindestens 50 Gew.% Styrol einpolymerisiert enthalten. Als Comonomere kommen z.B. in Betracht α-Methylstyrol, kernhalogenierte Styrole, kernalkylierte Styrole, Acrylnitril, Ester der (Meth)acrylsäure von Alkoholen mit 1 bis 8 C-Atomen, N-Vinylverbindungen, wie Vinylcarbazol, Maleinsäureanhydrid oder auch geringe Mengen an Verbindungen, die zwei polymerisierbare Doppelbindungen enthalten, wie Butadien, Divinylbenzol oder Butandioldiacrylat.

Das Treibmittel wird in einer Menge von 7 bis 16 Gew.%, vorzugsweise 8 bis 15 Gew.%, insbesondere 10 bis 14 Gew.%, bezogen auf das Styrolpolymer sat, verwendet. Es enthält 20 bis 90 Gew.%, vorzugsweise 40 bis 80 Gew.%, insbesondere 50 bis 70 Gew.% eines $C_3$-$C_5$-Kohlenwasserstoffs, wie Propan, n-Butan, i-Butan, n-Pentan oder i-Pentan oder deren Gemische, 10 bis 60 Gew.%, vorzugsweise 15 bis 50 Gew.% Ethylchlorid und/oder Kohlendioxid, sowie gegebenenfalls bis zu 30 Gew.% vorzugsweise bis zu 25 Gew.%, insbesondere 10 bis 25 Gew.% Dichlordifluormethan und/oder 1,1-Difluor-1-chlorethan.

Die optimale Zusammensetzung des Treibmittelgemisches läßt sich leicht durch Vorversuche ermitteln. Besonders vorteilhafte Ergebnisse werden mit einem Treibmittelgemisch aus 40 bis 60 Gew.% $C_3$-$C_5$-Kohlenwasserstoffen und 40 bis 60 Gew.% Kohlendioxid erzielt. Derartige Gemische sind frei von jeglichen Halogenkohlenwasserstoffen und daher besonders umweltfreundlich. Das Kohlendioxid kann ganz oder teilweise durch Ethylchlorid ersetzt werden. Vorteilhaft liegt dann das Gewichtsverhältnis Ethylchlorid zu Kohlendioxid zwischen 1:10 und 10:1, insbesondere zwischen 1:5 bis 5:1.

Erhöht man den Anteil an Kohlendioxid im Treibmittelgemisch auf über 60 %, so erhält man stark offenzellige Schaumstoffe mit hohem Wasseraufnahmevermögen. Durch Zusatz von Dichlordifluormethan und/oder 1,1-Difluor-1-chlorethan kann das Wärmedämmvermögen des Schaumstoffs erhöht werden.

Als übliche Zusatzstoffe können dem Styrolpolymerisat-Treibmittel-Gemisch Antistatika, Stabilisatoren, Farbstoffe, Schmiermittel, Füllstoffe, Flammschutzmittel und/oder Keimbildner in üblichen Mengen zugesetzt werden.

Die Herstellung der Schaumstoffplatten erfolgt erfindungsgemäß in an sich bekannter Weise durh Extrusion. In einem Extruder wird das durch Erwärmen plastifizierte Styrolpolymerisat mit dem Treibmittelgemisch und den Zusatzstoffen innig vermischt. Das Gemisch durchläuft sodann eine Beruhigungszone, in der es unter ständigem Rühren auf eine Temperatur zwischen etwa 100 und 120°C gekühlt und anschließend durch eine Düse zu Platten extrudiert wird.

Erfindungsgemäße weisen die Schaumstoffplatten einen Querschnitt von mindestens 50 cm², vorzugsweise mindestens 100 bis zu etwa 1000 cm² auf. Die Erfindung erlaubt die Herstellung von Platten der Dicke bis 160 mm, einer Breite bis 900 mm und einer Dichte von 25 bis 60 g/l.

Die Erfindung wird anhand der folgenden Beispiele erläutert. Die in den Beispielen genannten Teile sind Gewichtsteile.

Beispiele 1 bis 8

100 Teile Polystyrol mit einem Schmelzindex von 4,5, 1,5 Teile Hexabromcyclododecan als Flammschutzmittel und 1 Teil Talkum zur Regelung der Zellgröße wurden einem Extruder mit einem inneren Schneckendurchmesser von 120 mm kontinuierlich zugeführt. Durch eine in den Extruder angebrachte Einlaßöffnung wurde gleichzeitig ein Treibmittelgemisch in den Extruder kontinuierlich eingedrückt. Das in dem Extruder gleichmäßig geknetete Gel wurde dann nach einer Verweilzeit von 15 Minuten auf eine Austrittstemperatur von 105°C gekühlt und durch eine 300 mm breite und 1,5 mm weite Düse in die Atmosphäre extrudiert. Der Schaum wurde durch eine mit dem Extruder verbundenen Formkanal geführt, wobei eine geschäumte Polystyrolplatte mit einer Querschnittsgröße von 650 mm x 50 mm entstand. Das geschäumte Produkt wurde in Stücke mit einer Querschnittsfläche von 600 mm x 50 mm und einer Länge von 1250 mm geschnitten. Geprüft wurden die Proben nach einer Ablagerzeit von 30 Tagen. Der in der Tabelle 1 angege bene λ-Wert wurde aus Messungen nach 6 Monaten auf eine 2jährige Lagerzeit extrapoliert. Das Treibmittelgemisch für jedes Beispiel ist in der Tabelle 1 aufgeführt.

Gemessen wurde der λ-Wert (Wärmeleitzahl) nach DIN 52 612, die Schaumstoffdichte nach DIN 53 420, die Zellgröße nach ASTM D 3842-69, die geschlossenen Zellen nach DIN-ISO 4590, die Wasseraufnahme an ganzen Platten nach DIN 53 434, die Druckfestigkeit nach DIN 53 421 und die Dimensionsstabilität nach DIN 53 431.

Tabelle 1

| Beispiel | Treibmittel- menge Gew.% bezogen auf Polystyrol | n-Butan Gew.% | n-Pentan Gew.% | $CO_2$ Gew.% | $C_2H_5Cl$ Gew.% | $CClF_2CH_3$ Gew.% | Wärmeleitzahl $\lambda$-Wert [W/m.K] |
|---|---|---|---|---|---|---|---|
| 1 | 8 | – | 20 | 50 | – | 30 | 0,0315 |
| 2 | 12 | – | 90 | 10 | – | – | 0,0360 |
| 3 | 10 | – | 40 | 30 | 10 | 20 | 0,0340 |
| 4 | 13 | – | 40 | 20 | 40 | – | 0,0365 |
| 5 | 16 | – | 50 | – | 30 | 20 | 0,0345 |
| 6 | 7 | – | 40 | 60 | – | – | 0,0370 |
| 7 | 14 | – | 30 | 10 | 50 | 10 | 0,0360 |
| 8 | 6,5 | 40 | – | 30 | 30 | – | 0,0372 |
| 9 | 9,5 | 30 | – | 20 | 20 | 30 | 0,0305 |
| 10 (Vergleich) | 14 | – | 20 | 80 | – | – | 0,0368 |

EP 0 361 096 A1

EP 0 361 096 A1

Tabelle 1 (Fortsetzung)

| Beispiel | Schaumstoff-dichte g/l | Zellgröße mm | geschlossene Zellen % | Wasserauf-nahme Vol.% | Druckfestig-keit [N/mm$_2$] | Dimensions-stabilität in % | | |
|---|---|---|---|---|---|---|---|---|
| | | | | | | Länge | Breite | Dicke |
| 1 | 32 | 0,15 | 94,0 | 0,18 | 0,22 | −1,2 | −1,0 | −0,6 |
| 2 | 37 | 0,13 | 97,0 | 0,09 | 0,32 | +5 | +4,5 | +4,0 |
| 3 | 33,5 | 0,26 | 94,5 | 0,17 | 0,25 | +2,1 | +1,6 | +0,3 |
| 4 | 31 | 0,28 | 95 | 0,15 | 0,26 | +3,1 | +2,9 | +0,7 |
| 5 | 38 | 0,30 | 97 | 0,09 | 0,31 | +6,0 | +4,8 | +1,2 |
| 6 | 32,5 | 0,25 | 94 | 0,185 | 0,28 | −0,3 | −0,2 | −0,1 |
| 7 | 36 | 0,32 | 97 | 0,038 | 0,30 | +3,9 | +3,2 | +3,0 |
| 8 | 32 | 0,25 | 96 | 0,14 | 0,265 | +3,0 | +2,8 | +0,7 |
| 9 | 33 | 0,18 | 97 | 0,085 | 0,27 | +3,6 | +3,0 | +0,85 |
| 10 | 30 | 0,27 | 35 | 3,5 | 0,27 | −0,4 | −0,3 | −0,1 |

**Ansprüche**

Verfahren zur Herstellung von Schaumstoffplatten mit hoher Druckfestigkeit und einem Querschnitt von mindestens 50 cm² durch Extrusion eines Gemisches aus einem Styrolpolymerisat, 7 bis 16 Gew.-%, bezogen auf das Styrolpolymerisat, eines Treibmittels sowie gegebenenfalls üblichen Zusatzstoffen, , dadurch gekennzeichnet, daß man als Treibmittel ein Gemisch verwendet, welches
a) 20 bis 90 Gew.-% mindestens eines gesättigten $C_3$- bis $C_5$-Kohlenwasserstoffs
b) 10 bis 60 Gew.-% Ethylchlorid und/oder Kohlendioxid und
c) 0 bis 30 Gew.-% Dichlordifluormethan und/oder 1,1-Difluor-1-chlorethan
enthält.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 344 710 (JOHNSON et al.) <br> * Spalte 4, Zeilen 48-60 * <br> --- | 1 | C 08 J 9/12 // <br> C 08 L 25/04 |
| A | CHEMICAL ABSTRACTS, Band 86, Nr. 24, 13. Juni 1977, Seite 64, Zusammenfassung Nr. 172727j, Columbus, Ohio, US; & JP-A-77 21 269 (ASAHI DOW LTD) 23-02-1977 <br> * Insgesamt * <br> --- | 1 | |
| A | CH-A- 451 069 (ALLIED CHEMICAL CORP.) <br> * Anspruch 1; Spalte 3, Zeilen 21-30 * <br> --- | 1 | |
| X | US-A-4 424 287 (JOHNSON et al.) <br> * Ansprüche 1-7 * <br> --- | 1 | |
| A | US-A-3 160 688 (AYKANIAN) <br> * Spalte 3, Zeilen 46-55 * <br> ----- | 1 | |

**RECHERCHIERTE SACHGEBIETE (Int. Cl.5)**

C 08 J

**Der vorliegende Recherchenbericht wurde für alle Patentansprüche erstellt**

| Recherchenort | Abschlußdatum der Recherche | Prüfer |
|---|---|---|
| DEN HAAG | 25-12-1989 | OUDOT R. |